# EUROPÄISCHE PATENTANMELDUNG

(11) **EP 4 454 957 A2**
(43) Veröffentlichungstag der Anmeldung: **30.10.2024**
(21) Anmeldenummer: 24192925.6
(22) Anmeldetag: 08.06.2019
(51) Int. Cl.: B60S 1/38

(54) **ADAPTEREINHEIT**

(30) Priorität: 30.07.2018 DE 102018212661
(62) Teilanmeldung aus: 19729748.4
(71) Anmelder: Robert Bosch GmbH, 70442 Stuttgart (DE)
(72) Erfinder: Bubba, Marcello, 3210 Linden (BE); Bratec, Herve, 3500 Sint-Lambrechts-Merk (BE); Depondt, Helmut, 3370 Boutersem (BE); Kruse, Michael, 76547 Sinzheim (DE); Kraemer, Godelieve, 76549 Huegelsheim (DE); Truyens, Stijn, 3300 Tienen (BE)

(57) **Zusammenfassung**

Die Erfindung betrifft eine Adaptereinheit, die zu einer Kopplung, insbesondere lösbaren Kopplung eines Wischblatts mit einem Wischarm vorgesehen ist, aufweisend eine Windabweiserfläche, welche dazu eingerichtet ist, eine anströmende Luft abzuweisen und das Wischblatt an eine Fahrzeugscheibe zu drücken. Es wird vorgeschlagen, dass die Windabweiserfläche wenigstens eine erste Teilfläche und eine zweite Teilfläche aufweist, wobei die erste Teilfläche eine andere Ausrichtung aufweist als die zweite Teilfläche und/oder wobei die erste Teilfläche eine andere Geometrie aufweist als die zweite Teilfläche.

## Beschreibung

Die Erfindung betrifft eine Adaptereinheit, die zu einer Kopplung, insbesondere lösbaren Kopplung eines Wischblatts mit einem Wischarm vorgesehen ist, aufweisend eine Windabweiserfläche.

### Stand der Technik

Es sind bereits Wischvorrichtungen umfassend einen Wischarm und ein Wischblatt sowie eine Adaptereinheit zur lösbaren Kopplung eines Wischarms mit einem Wischblatt vorgeschlagen worden. Solche Wischvorrichtungen haben den Nachteil, dass der Wischarm stets eine hohe Anpresskraft zum Andrücken des Wischblatts an eine Fahrzeugscheibe aufbringen muss, um eine ausreichende Wischleistung zu gewährleisten.

### Offenbarung der Erfindung

### Vorteile

Die vorliegende Erfindung betrifft eine Adaptereinheit, die zu einer Kopplung, insbesondere lösbaren Kopplung eines Wischblatts mit einem Wischarm vorgesehen ist, aufweisend eine Windabweiserfläche, welche dazu eingerichtet ist, eine anströmende Luft abzuweisen und das Wischblatt an eine Fahrzeugscheibe zu drücken, dadurch gekennzeichnet, dass die Windabweiserfläche wenigstens eine erste Teilfläche und eine zweite Teilfläche aufweist, wobei die erste Teilfläche eine andere Ausrichtung aufweist als die zweite Teilfläche und/oder wobei die erste Teilfläche eine andere Geometrie aufweist als die zweite Teilfläche.

Das hat den Vorteil, dass die Windabweiserfläche bei schneller Fahrt aufgrund des sie anströmenden Fahrtwinds das Wischblatt an die Fahrzeugscheibe presst. Das erhöht eine Gesamtanpresskraft des Wischblatts an die Fahrzeugscheibe und verbessert die Wischleistung. Die benötigte Anpresskraft, mit welcher der Wischarm das Wischblatt an die Fahrzeugscheibe presst, wird auf diese Weise reduziert. Es kann ein günstigerer und/oder einfacherer und/oder zuverlässigerer und/oder kompakterer Wischarm mit einer geringeren Anpresskraft verwendet werden, insbesondere mit einer kleineren Feder zum Aufbringen der Anpresskraft. Weiterhin wird durch die Verwendung einer WIndabweiserfläche gemäß der vorliegenden Erfindung verhindert, dass die Adaptereinheit bzw. eine Wischvorrichtung - umfassend die Adaptereinheit, das Wischblatt und den Wischarm - durch eine ungünstige Aerodynamik bei schneller Fahrt eine Kraft generiert, welche der benötigten Anpresskraft entgegengesetzt ist und so die Wischleistung verschlechtern würde oder sogar ein Wischen unmöglich machen würde. Durch die Adaptereinheit gemäß der vorliegenden Erfindung wird sichergestellt, dass aufgrund von aerodynamischen Effekten, insbesondere einem Wind, insbesondere Fahrtwind, eine resultierende Kraft das Wischblatt auf die Fahrzeugscheibe drückt. Dadurch, dass die erste Teilfläche und die zweite Teilfläche jeweils eine andere Geometrie und/oder eine andere Ausrichtung aufweisen, ist eine präzise Einstellung von Anpresskräften möglich, insbesondere einer Ausrichtung der Anpresskräfte.

Darunter, dass die erste Teilfläche eine andere Ausrichtung hat als die zweite Teilfläche soll insbesondere verstanden werden, dass ein erster Normalenvektor der ersten Teilfläche bzw. ein erster gemittelter Normalenvektor nicht parallel angeordnet ist zu einem zweiten Normalenvektor der zweiten Teilfläche bzw. einem zweiten gemittelten Normalenvektor der zweiten Teilfläche. Die zweite Teilfläche hat eine andere Ausrichtung als die erste Teilfläche. Unter einem mittleren Normalenvektor einer Fläche ist ein Vektor zu verstehen, der das Mittel über alle oder fast alle Normalenvektoren der Fläche darstellt.

Darunter, dass die erste Teilfläche eine andere Geometrie hat als die zweite Teilfläche soll insbesondere verstanden werden, dass die erste Teilfläche eine unterschiedliche Krümmung und/oder einen unterschiedlichen Flächeninhalt und/oder eine unterschiedliche Diagonallänge und/oder unterschiedliche Seitenlängen und/oder einen unterschiedlichen Verlauf des Umfangs und/oder unterschiedliche Seitenwinkel und/oder eine unterschiedliche Form im Vergleich zur zweite Teilfläche aufweist.

Die Adaptereinheit kann mit der Windabweiserfläche einstückig ausgebildet sein. Unter einstückig soll in diesem Zusammenhang insbesondere stoffschlüssig verbunden, wie beispielsweise durch einen Schweißprozess und/oder einen Klebeprozess usw. und besonders vorteilhaft angeformt verstanden werden, wie durch die Herstellung aus einem Guss und/oder durch die Herstellung in einem Ein- oder Mehrkomponentenspritzverfahren.

Es ist insbesondere denkbar, dass die Adaptereinheit mit der ersten Teilfläche und/oder der zweiten Teilfläche einstückig ausgebildet ist.

Die Adaptereinheit kann wenigsten ein erstes Teilstück und ein zweites Teilstück aufweisen, wobei das erste Teilstück die erste Teilfläche aufweist und das zweite Teilstück die zweite Teilfläche aufweist. Vorteilhaft ist das erste Teilstück mit der ersten Teilfläche einstückig ausgebildet und/oder ist das zweite Teilstück einstückig mit der zweiten Teilfläche ausgebildet. Das erste Teilstück und das zweite Teilstück können stoffschlüssig verbunden sein, wie beispielsweise durch einen Schweißprozess und/oder einen Klebeprozess usw. und/oder formschlüssig verbunden sein, wie beispielsweise durch Clipsen und/oder Einstecken und/oder Einrasten und/oder Verschrauben.

Vorteilhaft weist die Adaptereinheit ein Wischarmkopplungselement auf, welches zur unmittelbaren oder mittelbaren Kopplung mit dem Wischarm vorgesehen ist. Vorteilhaft ist die Adaptereinheit mit dem Wischarmkopplungselement einstückig ausgebildet.

Vorteilhaft weist die Adaptereinheit ein Wischblattkopplungselement auf, welches zur unmittelbaren oder mittelbaren Kopplung mit dem Wischblatt vorgesehen ist. Vorteilhaft ist die Adaptereinheit mit dem Wischblattkopplungselement einstückig ausgebildet.

Durch die in den Unteransprüchen aufgeführten Merkmale sind vorteilhafte Weiterbildungen der Adaptereinheit möglich.

Es ist besonders vorteilhaft, wenn die Windabweiserfläche einen Hauptwinkel zwischen 25° und 75°, bevorzugt zwischen 40° und 60° mit einer Windanströmrichtung einschließt. Auf diese Weise werden gute aerodynamische Eigenschaften der Adaptereinheit mit einem ausreichend großem Baumraum der Adaptereinheit ermöglicht, insbesondere für eine Unterbringung des Wischarmkopplungselements.

Unter einen Hauptwinkel ist der Winkel zu verstehen, den die Windabweiserfläche zur Windanströmrichtung aufweist. Vorteilhaft wird der Hauptwinkel um die Wischarmrichtung gemessen. Ein positiver Hauptwinkel zwischen 0° und 90° beschreibt dabei eine Windabweiserfläche, welche wenigstens teilweise zur Windanströmrichtung zugewendet ist. Je näher der Hauptwinkel an 90°, umso stärker ist die Windabweiserfläche der Windanströmrichtung zugewendet. Unter einer Windanströmrichtung soll die Richtung verstanden werden, in der der Fahrtwind in einem nicht wischenden Ruhezustand der an der Fahrzeugscheibe angebrachten Adaptereinheit bzw. eine Wischvorrichtung Wischvorrichtung - umfassend die Adaptereinheit, das Wischblatt und den Wischarm - anströmen würde.

Vorteilhaft wird der Hauptwinkel zwischen der Windanströmrichtung und einer Projektion der Windanströmrichtung auf die Windabweiserfläche aufgespannt, wobei die Projektion vorteilhaft entlang einer Projektionsebene durchgeführt wird, in welcher die Windanströmrichtung liegt und welche senkrecht oder weitgehend senkrecht zur Wischarmrichtung angeordnet ist. Es ist auch möglich, dass die Projektionsebene durch die Windanströmrichtung und einen Normalenvektor bzw. einen mittleren Normalenvektor der Windabweiserfläche aufgespannt wird. Bei einer gekrümmten bzw. nicht ebenen Windabweiserfläche ist es denkbar, dass der Hauptwinkel zwischen der Windanströmrichtung und einer Tangentialebene aufgespannt ist, wobei die Tangentialebene in einem ausgezeichneten Punkt - beispielsweise dem Mittelpunkt - der Windabweiserfläche liegt oder die Tangentialebene eines mittleren Normalenvektors der Windabweiserfläche ist. Unter einem mittleren Normalenvektor ist ein Vektor zu verstehen, der das Mittel über alle oder fast alle Normalenvektoren der Windabweiserfläche darstellt.

Die Aerodynamik der Adaptereinheit wird weiter verbessert, wenn die erste Teilfläche und/oder die zweite Teilfläche zumindest bereichsweise parallel und/oder weitgehend parallel zu einer Wischarmrichtung ausgerichtet ist. Unter einer Wischarmrichtung soll eine Richtung verstanden werden, welche in Richtung einer größten Längsausdehnung des an der Adaptereinheit montierten Wischarms angeordnet ist, insbesondere in einer Grundstellung. Im unmontierten Zustand ist die Wischarmrichtung die Richtung an der Adaptereinheit, in die ein montierter Wischarm zeigen würde, insbesondere in einer Grundstellung. Darunter, dass eine Teilfläche parallel zu einer Wischarmrichtung ausgerichtet ist, soll insbesondere verstanden werden, dass ein Tangentialvektor der Teilfläche oder ein mittlerer Tangentialvektor der Teilfläche parallel zur Wischarmrichtung ausgerichtet ist. Ein mittlerer Tangentialvektor ist ein Vektor, der in der Tangentialebene des mittleren Normalenvektors liegt. Ist die Teilfläche eben ausgebildet, so liegt ein Tangentialvektor in einer Ebene, in der die Teilfläche liegt.

Unter weitgehend parallel soll verstanden werden, dass eine erste Achse mit einer zweiten Achse einen Winkel einschließt, der nicht mehr als 8°, vorteilhaft nicht mehr als 5°, besonders vorteilhaft nicht mehr als 2° von 0° abweicht. Unter weitgehend senkrecht soll verstanden werden, dass eine erste Achse mit einer zweiten Achse einen Winkel einschließt, der nicht mehr als 8°, vorteilhaft nicht mehr als 5°, besonders vorteilhaft nicht mehr als 2° von 90° abweicht.

Die Adaptereinheit hat eine besonders gute Aerodynamik, wenn eine Trennlinie zwischen der ersten Teilfläche und der zweiten Teilfläche zumindest bereichsweise senkrecht und/oder weitgehend senkrecht zur Wischarmrichtung ausgerichtet ist. Vorteilhaft treffen die erste Teilfläche und die zweite Teilfläche zumindest bereichsweise auf der Trennlinie zusammen. Insbesondere kann ein Verbindungsbereich zwischen der ersten Teilfläche und der zweiten Teilfläche entlang der Trennlinie verlaufen. Vorteilhaft ist die Trennlinie grade oder weitgehend grade. Bevorzugt ist die Trennlinie eine gedachte Linie. Es ist auch denkbar, dass die Trennlinie ein Teil eines Strukturelements der Adaptereinheit ist, beispielsweise eine Kante oder Erhebung zwischen der ersten Teilfläche und der zweiten Teilfläche. Die Trennlinie kann grade sein oder eine Krümmung aufweisen.

Eine Adaptereinheit, bei der die erste Teilfläche und/oder die zweite Teilfläche zumindest bereichsweise eben oder weitgehend eben ausgebildet ist, hat den Vorteil, dass dieses einfach fertigbar ist und gute aerodynamische Eigenschaften aufweist. Unter einer weitgehend ebenen Fläche soll eine Fläche verstanden werden, die so in eine gedachte Ebene gelegt werden kann, dass ein maximaler Abstand von dieser Ebene weniger als 7% von einem größten Durchmesser der weitgehend ebenen Fläche beträgt, bevorzugt weniger als 3%, besonders bevorzugt weniger als 1%.

Besonders vorteilhaft ist eine Adaptereinheit, bei der die erste Teilfläche unter einem ersten Winkel zwischen 0° und 45°, bevorzugt zwischen 5° und 30°, besonders bevorzugt zwischen 10° und 20° zur der zweiten Teilfläche angeordnet ist, wobei der erste Winkel der Winkel zwischen einer Flächennormalen der ersten Teilfläche und einer Flächennormalen der zweiten Teilfläche ist. Dabei soll unter einer Flächennormalen einer Teilfläche insbesondere ein Normalenvektor der Teilfläche - bevorzugt bei einer ebenen oder weitgehend ebenen Teilfläche - und/oder ein mittlerer Normalenvektor der Teilfläche verstanden werden - bevorzugt bei einer gekrümmten Teilfläche.

Die Adaptereinheit wird weiter verbessert, wenn die erste Teilfläche und die zweite Teilfläche wenigstens teilweise in der Trennlinie zusammentreffen und einen zweiten Winkel an der Trennlinie aufspannen, wobei der zweite Winkel an einer Außenseite der Windabweiserfläche bzw. an einer windzugewandten Seite der Windabweiserfläche liegt und der zweite Winkel zwischen 180° und 270°, bevorzugt zwischen 190° und 235°, besonders bevorzugt zwischen 200° und 220° liegt. Eine solche Windabweiserfläche ist insbesondere konvex ausgebildet. Bevorzugt wird der zweite Winkel zwischen einem ersten Strahl - der sich von einem Bezugspunkt auf der Trennlinie in Richtung der ersten Teilfläche erstreckt und senkrecht zur Trennlinie sowie tangential zur ersten Teilfläche angeordnet ist - und einem zweiten Strahl - der sich von dem Bezugspunkt auf der Trennlinie in Richtung der zweitenTeilfläche erstreckt und senkrecht zur Trennlinie sowie tangential zur zweiten Teilfläche angeordnet ist - aufgespannt.

Die Adaptereinheit wird weiter verbessert, wenn die erste Teilfläche und die zweite Teilfläche wenigstens teilweise in der Trennlinie zusammentreffen und einem dritten Winkel an der Trennlinie aufspannen, wobei der dritte Winkel an einer Außenseite der Windabweiserfläche bzw. an einer windzugewandten Seite der Windabweiserfläche liegt und der dritte Winkel zwischen 90° und 180°, bevorzugt zwischen 135° und 170°, besonders bevorzugt zwischen 150° und 160° liegt. Eine solche Windabweiserfläche ist insbesondere konkav ausgebildet. Bevorzugt wird der dritte Winkel zwischen einem ersten Strahl - der sich von einem Bezugspunkt auf der Trennlinie in Richtung der ersten Teilfläche erstreckt und senkrecht zur Trennlinie sowie tangential zur ersten Teilfläche angeordnet ist - und einem zweiten Strahl - der sich von dem Bezugspunkt auf der Trennlinie in Richtung der zweiten Teilfläche erstreckt und senkrecht zur Trennlinie sowie tangential zur zweiten Teilfläche angeordnet ist - aufgespannt.

Die Aerodynamik der Adaptereinheit wird weiter verbessert durch eine obere Fläche, welche an einer windabgewandten Seite der Windabweiserfläche angeordnet ist und parallel oder weitgehend parallel zu der Wischarmrichtung ausgerichtet ist und wobei die obere Fläche einen oberen Winkel zwischen 10° und 25°, bevorzugt zwischen 15° und 20° mit einer Windanströmrichtung einschließt, so dass die obere Fläche dazu eingerichtet ist, eine anströmende Luft abzuweisen und das Wischblatt an eine Fahrzeugscheibe zu drücken. Auf diese Weise wird ein laminarer Strömungsverlauf eines die Adaptereinheit umströmenden Windes begünstigt.

Bevorzugt ist die obere Seite an einer Seite der Adaptereinheit angeordnet, welche im montierten Zustand gegenüber vom Wischblatt angeordnet ist. Beispielsweise kann die obere Seite in der Adaptereinheit gegenüber einer unteren Seite angeordnet sein, wobei die untere Seite zum Führen oder Aufnehmen des Wischblatts eingerichtet ist, beispielsweise durch eine Wischblattaufnahme.

Die Adaptereinheit wird weiter verbessert, wenn die obere Fläche zumindest bereichsweise konvex ausgebildet ist. Bevorzugt ist die obere Fläche entlang der Windanströmrichtung konvex. Darunter, dass eine Fläche der Adaptereinheit konvex ausgebildet ist, soll insbesondere verstanden werden, dass die Fläche aus der Adaptereinheit herausgewölbt ist.

Weist die Adaptereinheit eine Rückseite auf, welche an einer der Windabweiserfläche gegenüberliegenden Seite der Adaptereinheit angeordnet ist und welche an einer windabgewandten Seite der Adaptereinheit angeordnet ist, wobei die Rückseite um einen hinteren Winkel zwischen 10° und 40°, bevorzugt zwischen 20° und 30° gegenüber einer Flächennormalen einer Adaptereinheitgrundfläche verkippt ist, so dass die Rückseite die Adaptereinheitgrundfläche in der Windanströmrichtung überragt, hat das den Vorteil, dass Turbulenzen in der die Adaptereinheit umströmenden Luft minimiert werden.

Die Aerodynamik der Adaptereinheit wird weiter verbessert durch eine wischarmzugewandte Fläche, welche dazu eingerichtet ist, den Wischarm zur Kopplung mit der Adaptereinheit durchzuführen und/oder aufzunehmen, wobei die wischarmzugewandte Fläche um einen rechtsseitigen Winkel zwischen 10° und 40°, bevorzugt zwischen 20° und 30° gegenüber einer Flächennormalen einer Adaptereinheitgrundfläche verkippt ist. Auf diese Weise wird auch ein ausreichender Anpressdruck während eines Wischvorgangs, bei der die Adaptereinheit bzw. das Wischsystem aus der Ruheposition herausbewegt wird, gewährleistet.

Eine weitere Verbesserung tritt ein, wenn die wischarmzugewandte Fläche wenigstens bereichsweise konkav ausgebildet ist. Vorteilhaft ist die wischarmzugewandte Fläche wenigstens bereichsweise konkav in Richtung der Flächennormalen ausgebildet. Darunter, dass eine Fläche der Adaptereinheit konkav ausgebildet ist, soll insbesondere verstanden werden, dass die Fläche in die die Adaptereinheit hineingewölbt ist.

Die Aerodynamik der Adaptereinheit wird weiter verbessert durch eine wischarmabgewandte Fläche, welche gegenüber einer Seite der Adaptereinheit angeordnet ist, welche dazu vorgesehen ist, dass an ihr der Wischarm mit der Adaptereinheit koppelt, wobei die wischarmabgewandte Fläche um einen linksseitigen Winkel zwischen 10° und 40°, bevorzugt zwischen 20° und 30° gegenüber einer Flächennormalen einer Adaptereinheitgrundfläche verkippt ist. Auf diese Weise wird auch ein ausreichender Anpressdruck während eines Wischvorgangs, bei der die Adaptereinheit bzw. das Wischsystem aus der Ruheposition herausbewegt wird, gewährleistet.

Eine weitere Verbesserung tritt ein, wenn die wischarmabgewandte Fläche wenigstens bereichsweise konvex ausgebildet ist. Vorteilhaft ist die wischarmabgewandte Fläche wenigstens bereichsweise konvex in Richtung der Flächennormalen ausgebildet.

Ist die Adaptereinheit dazu eingerichtet, den Wischarm mit dem Wischblatt um eine Lagerachse schwenkbar zu verbinden, hat das den Vorteil, dass eine optimale Anpresskraft weitgehend über einen gesamten Wischbereich auf der Fahrzeugscheibe gewährleistet werden kann, insbesondere bei gekrümmten Fahrzeugscheiben.

Vorteilhaft ist die Adaptereinheit so ausgebildet, dass die Lagerachse parallel oder weitgehend parallel zur Windanströmrichtung angeordnet ist. Vorteilhaft ist die Adaptereinheit so ausgebildet, dass die Lagerachse senkrecht oder weitgehend senkrecht zu einer Wischarmrichtung angeordnet ist. Vorteilhaft ist die Lagerachse parallel oder weitgehend parallel zu einer vorgesehenen Wischrichtung angeordnet. Vorteilhaft ist die Lagerachse so angeordnet, dass sie in einem nicht wischenden Ruhezustand der an der Fahrzeugscheibe angebrachten Wischvorrichtung - umfassend die Wischarmadaptereinheit, das Wischblatt und den Wischarm - parallel oder weitgehend parallel zu einer Windanströmrichtung bzw. zur einer Fahrzeugfahrrichtung angeordnet ist. Besonders vorteilhaft liegt die Lagerachse in einem am Fahrzeug montierten Zustand parallel zur Fahrzeugscheibe, bevorzugt an jeder Position über eine Wischbewegung.

Besonders vorteilhaft ist eine Adaptereinheit, umfassend eine Wischarmadaptereinheit und eine Wischblattadaptereinheit, wobei die Wischarmadaptereinheit zur Kopplung mit dem Wischarm vorgesehen ist und die Wischblattadaptereinheit dazu vorgesehen ist, das Wischblatt aufzunehmen, wobei die Wischarmadaptereinheit eine Wischblattadaptereinheitaufnahme aufweist, welche dazu vorgesehen ist, die Wischblattadaptereinheit um die Lagerachse schwenkbar aufzunehmen. Auf diese Weise kann zu jedem Zeitpunkt einer Wischbewegung eine besonders günstige Aerodynamik eines Verbindungsbereichs zwischen Adaptereinheit und Wischarm gewährleistet werden.

Vorteilhaft ist die Wischarmadaptereinheit mit der Windabweiserfläche und/oder mit der Wischblattadaptereinheitaufnahme einstückig ausgebildet. Vorteilhaft ist die Wischarmadaptereinheit fest mit den Wischarm verbindbar, insbesondere so, dass der Wischarm im mit der Wischarmadaptereinheit verbundenen Zustand weitgehend nicht gegenüber der Wischarmadaptereinheit beweglich ist.

Unter einer Wischblattadaptereinheit soll insbesondere ein Adapter verstanden werden, das einen Kontaktbereich zum Wischblatt bzw. zu einem Wischblattbauteil aufweist und mit dem Wischblatt bzw. dem Wischblattbauteil verbindbar ist, vorteilhaft fest verbindbar ist, insbesondere so verbindbar, dass das Wischblatt in mit der Wischblattadaptereinheit verbundenen Zustand weitgehend nicht gegenüber der Wischblattadaptereinheit beweglich ist. Vorteilhaft weist die Wischblattadaptereinheit ein Verbindungselement auf, welches dazu vorgesehen ist, mit der Wischblattadaptereinheitaufnahme der Wischarmadaptereinheit schwenkbar zu koppeln. Vorteilhaft ist die Wischblattadaptereinheit mit dem Kontaktbereich und/oder mit dem Verbindungselement einstückig ausgebildet. Es ist auch denkbar, dass die Wischblattadaptereinheit mit dem Wischblatt oder mit einem Wischblattbauteil einstückig ausgebildet ist. Vorteilhaft ist die Wischblattadaptereinheitaufnahme so ausgebildet, dass die Lagerachse senkrecht oder weitgehend senkrecht zu einer Wischarmrichtung angeordnet ist.

Besonders vorteilhaft ist eine Adaptereinheit, umfassend ein Grundelement, ein Abdeckelement und eine Wischarmaufnahme, welche dazu vorgesehen ist, den Wischarm um die Lagerachse schwenkbar aufzunehmen, wobei das Abdeckelement mit dem Grundelement verbindbar ausgebildet ist und die Wischarmaufnahme weitgehend abdeckt, und wobei das Abdeckelement die Windabweiserfläche aufweist, und wobei das Grundelement dazu eingerichtet ist das Wischblatt aufzunehmen, und wobei insbesondere das Abdeckelement mit dem Grundelement fest verbindbar ausgebildet ist, so dass das mit dem Grundelement verbundene Abdeckelement gegenüber dem Grundelement weitgehend unbeweglich ist. Auf diese Weise kann zu jedem Zeitpunkt einer Wischbewegung eine besonders günstige Aerodynamik eines Verbindungsbereichs zwischen Adaptereinheit und Wischblatt gewährleistet werden.

Vorteilhaft ist das Abdeckelement mit der Windabweiserfläche einstückig ausgebildet. Vorteilhaft weist das Abdeckelement ein Kopplungselement auf welches zur Verbindung mit dem Grundelement vorgesehen ist. Vorteilhaft ist das Abdeckelement mit dem Kopplungselement einstückig ausgebildet.

Unter einem Grundelement soll insbesondere ein Adapter verstanden werden, das einen Kontaktbereich zum Wischblatt bzw. zu einem Wischblattbauteil aufweist und mit dem Wischblatt bzw. dem Wischblattbauteil verbindbar ist, vorteilhaft fest verbindbar ist, insbesondere so verbindbar, dass das Wischblatt in mit dem Grundelement verbundenen Zustand weitgehend nicht gegenüber dem Grundelement beweglich ist. Vorteilhaft weist das Grundelement ein Aufnahmeelement auf, welches dazu vorgesehen ist, mit dem Abdeckelement bzw. mit dem Kopplungselement des Abdeckelements zu koppeln. Vorteilhaft ist die Wischblattadaptereinheit mit dem Kontaktbereich und/oder mit dem Verbindungselement einstückig ausgebildet. Es ist auch denkbar, dass das Grundelement mit dem Wischblatt oder mit einem Wischblattbauteil einstückig ausgebildet ist. Vorteilhaft weist das Grundelement die Wischarmaufnahme auf. Vorteilhaft ist das Grundelement mit der Wischarmaufnahme einstückig ausgebildet. Vorteilhaft ist die Wischarmaufnahme so ausgebildet, dass die Lagerachse senkrecht oder weitgehend senkrecht zu einer Wischarmrichtung angeordnet ist.

### Zeichnungen

In den Zeichnungen sind Ausführungsbeispiele der Adaptereinheit gemäß der vorliegenden Erfindung dargestellt und in der nachfolgenden Beschreibung näher erläutert. Es zeigen
Figur 1 eine Wischvorrichtung mit einer Adaptereinheit,
Figur 2 eine perspektivische Ansicht der Adaptereinheit,
Figuren 3 bis 11 sowie 13 bis 19 perspektivische Ansichten verschiedener Varianten der Adaptereinheit und
Figuren 12 und 20 Seitenansichten von Varianten der Adaptereinheit.

### Beschreibung

In den verschiedenen Ausführungsvarianten erhalten gleiche Teile die gleichen Bezugszahlen.

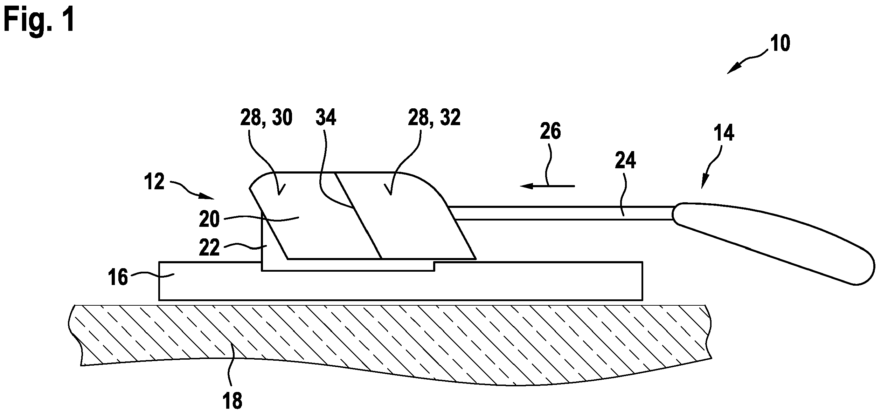

In der Figur 1 ist schematisch eine Wischvorrichtung 10 mit einer Adaptereinheit 12, einem Wischarm 14 und einem Wischblatt 16 in einer Seitenansicht gezeigt. Das Wischblatt 16 ist als Flachwischblatt ausgebildet. Das Wischblatt 16 ist zum Reinigen einer Fahrzeugscheibe 18 vorgesehen. Die Adaptereinheit 12 weist ein Abdeckelement 20 auf. Die Adaptereinheit weist ein Grundelement 22 auf. Der Wischarm 14 weist eine Wischstange 24 auf. Im Ausführungsbeispiel ist eine Hauptlängserstreckungsrichtung der Wischarmadaptereinheit parallel zu einer Wischarmrichtung 26 angeordnet. Eine Hauptlängserstreckungsrichtung des Wischblatts ist parallel zur Wischarmrichtung angeordnet. In vorteilhaften Varianten ist die Hauptlängserstreckungsrichtung der Wischarmadaptereinheit zumindest weitgehend parallel zu einer Wischarmrichtung 26 angeordnet. In vorteilhaften Varianten ist Hauptlängserstreckungsrichtung des Wischblatts ist zumindest weitgehend parallel zur Wischarmrichtung angeordnet. Das Abdeckelement weist eine Windabweiserfläche 28 auf. Die Windabweiserfläche weist eine erste Teilfläche 30 und eine zweite Teilfläche 32 auf. Die erste Teilfläche und die zweite Teilfläche sind durch eine Trennlinie 34 getrennt.

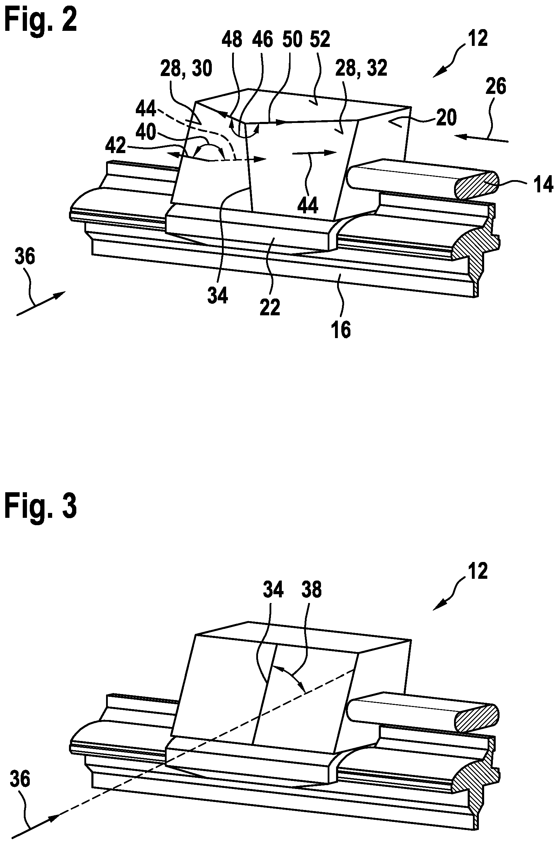

Figur 2 zeigt eine perspektivische Ansicht der Adaptereinheit 12. Die erste Teilfläche 30 weist eine andere Ausrichtung auf als die zweite Teilfläche 32. Insbesondere hat die erste Teilfläche 30 eine andere Ausrichtung zu einer Windanströmrichtung 36 als die zweite Teilfläche 32.

Figur 3 zeigt eine perspektivische Ansicht einer Variante der Adaptereinheit 12, bei der die Windabweiserfläche 28 einen Hauptwinkel 38 von 50° mit der Windanströmrichtung 36 einschließt.

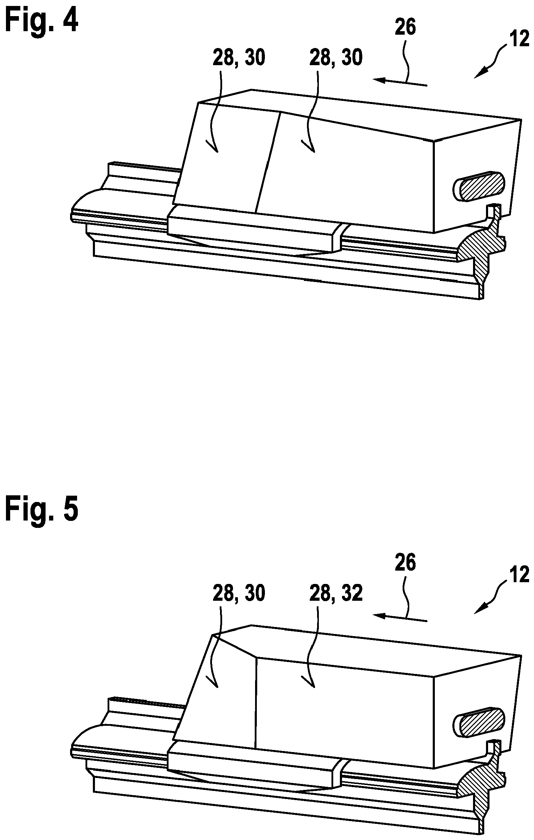

Figur 4 zeigt eine perspektivische Ansicht einer Variante der Adaptereinheit 12, bei der die erste Teilfläche parallel zur Wischarmrichtung ausgerichtet ist. In dieser Variante weist zudem die erste Teilfläche eine andere Geometrie auf als die zweite Teilfläche. Die erste Teilfläche hat einen kleineren Flächeninhalt als die zweite Teilfläche.

Figur 5 zeigt eine perspektivische Ansicht einer weiteren Variante der Adaptereinheit 12, bei der die zweite Teilfläche parallel zur Wischarmrichtung ausgerichtet ist. Auch in dieser Variante weist zudem die erste Teilfläche eine andere Geometrie auf als die zweite Teilfläche. Die erste Teilfläche hat einen kleineren Flächeninhalt als die zweite Teilfläche.

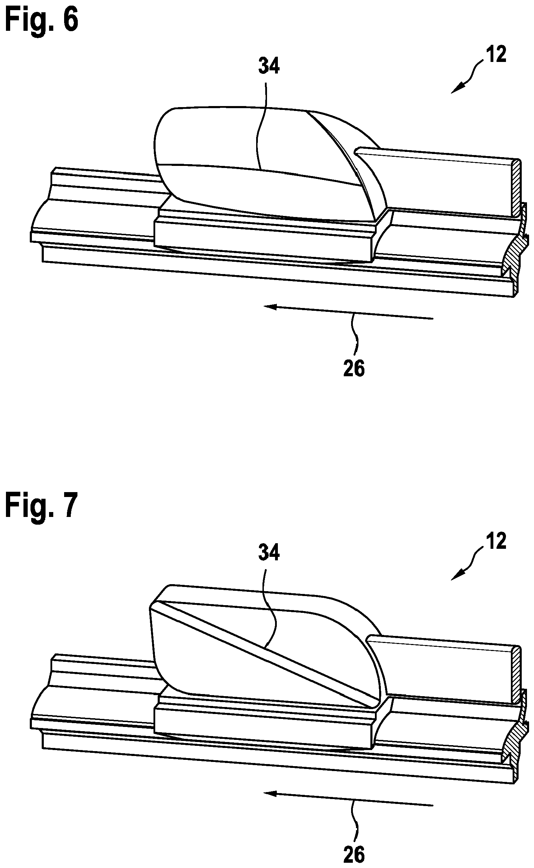

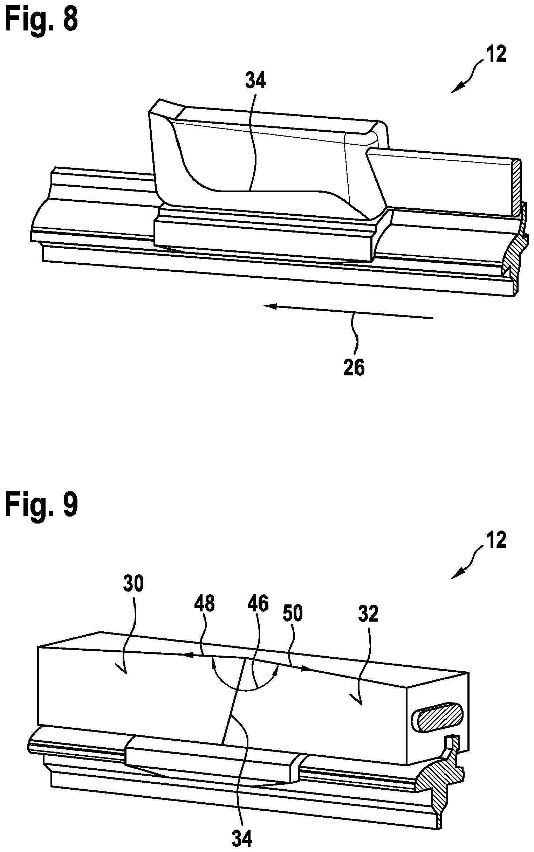

Im Ausführungsbeispiel verläuft die Trennlinie 34 senkrecht zur Wischarmrichtung 26 (siehe Figur 2). In alternativen Ausführungsformen kann die Trennlinie 34 eine andere Orientierung zur Wischarmrichtung aufweisen. Figur 6 zeigt eine Variante, in der die Trennlinie 34 weitgehend parallel zur Wischarmrichtung 26 verläuft. In Figur 7 ist eine Variante abgebildet, in der die Trennlinie in einem Winkel vom 45° zur Wischarmrichtung angeordnet ist. Die Trennlinie verläuft weitgehend diagonal über die Windabweiserfläche. Figur 8 zeigt eine Variante, in der die Trennlinie einen mehrfach gekrümmten Verlauf aufweist. Die Trennlinie ist stückweise S-förmig ausgebildet. Das ermöglicht eine besonders präzise Anpassung einer gewünschten Anpresskraft, insbesondere Anpresskraftrichtung an jedem Punkt der Adaptereinheit.

Im Ausführungsbeispiel ist die erste Teilfläche unter einem ersten Winkel 40 von 35° zur zweiten Teilfläche angeordnet (siehe Figur 2). Der erste Winkel 40 wird zwischen einem ersten Normalenvektor 42 der ersten Teilfläche und einem zweiten Normalenvektor 44 der zweiten Teilfläche eingeschlossen.

Im Ausführungsbeispiel spannen die erste Teilfläche und die zweite Teilfläche einen zweiten Winkel 46 von 215° an der Trennlinie auf. Der zweite Winkel 46 wird von einem ersten Strahl 48 der ersten Teilfläche und einem zweiten Strahl 50 der zweiten Teilfläche aufgespannt.

Figur 9 zeigt eine Variante, in der die erste Teilfläche und die zweite Teilfläche einen zweiten Winkel 46 von 155° an der Trennlinie aufspannen. Der zweite Winkel 46 wird von einem ersten Strahl 48 der ersten Teilfläche und einem zweiten Strahl 50 der zweiten Teilfläche aufgespannt.

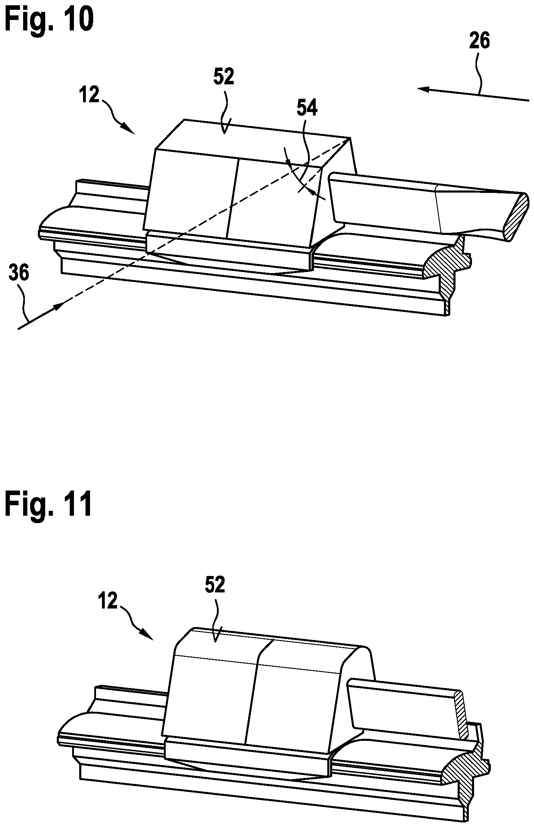

Figur 10 zeigt eine Variante der Adaptereinheit in der eine obere Fläche 52 einen oberen Winkel 54 mit der Windanströmrichtung 36 einschließt. Figur 11 zeigt eine weitere Variante, bei der die obere Fläche 52 konvex ausgebildet ist.

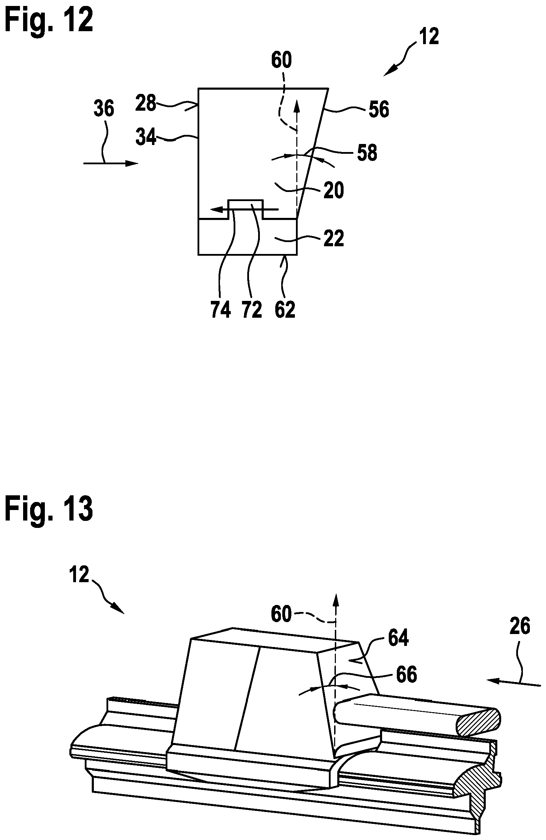

Figur 12 zeigt einen Schnitt durch die Adaptereinheit des Ausführungsbeispiels (siehe Figur 2) entlang der Trennlinie und senkrecht zur Wischarmrichtung 26. Eine Rückseite 56 der Adaptereinheit ist um einen hinteren Winkel 58 von 15° gegenüber einer Flächennormalen 60 einer Adaptergrundfläche 62 verkippt. Die Adaptergrundfläche ist im montierten Zustand der Adaptereinheit bevorzugt parallel oder weitgehend parallel zur Fahrzeugscheibe ausgerichtet.

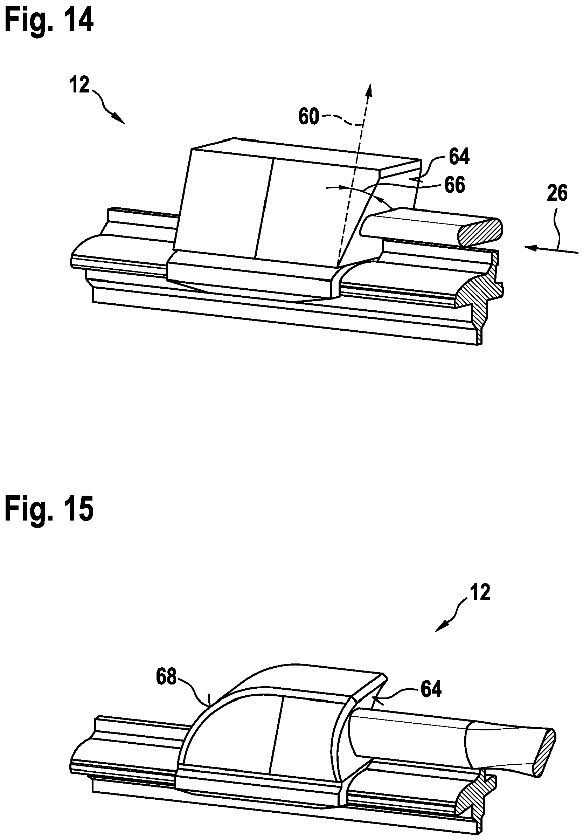

Figur 13 zeigt eine Variante, bei der eine wischarmzugewandte Fläche 64 gegenüber der Flächennormalen 60 um einen rechtsseitigen Winkel 66 von 10° in Wischarmrichtung 26 verkippt ist. Figur 14 zeigt eine Variante, bei der eine wischarmzugewandte Fläche 64 gegenüber der Flächennormalen 60 um einen rechtsseitigen Winkel 66 von 15° gegen die Wischarmrichtung 26 verkippt ist.

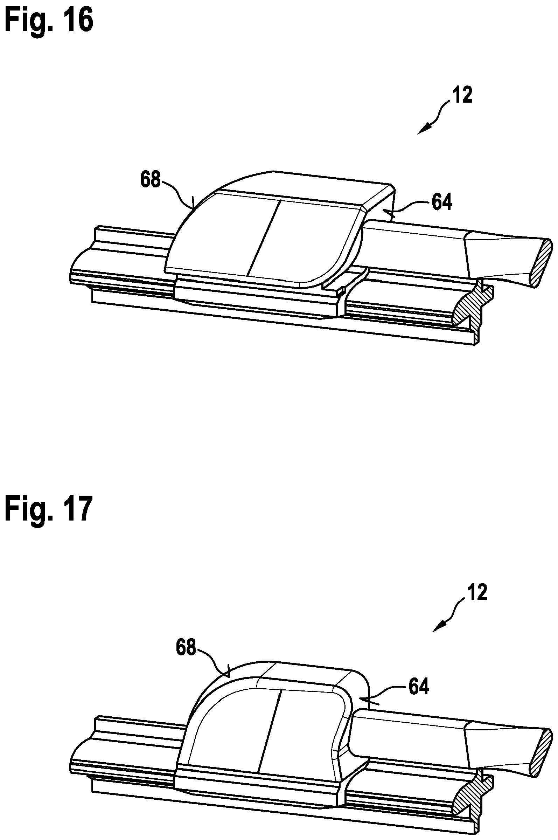

Figur 15 zeigt eine Variante, in der die wischarmzugewandte Fläche 64 konkav ausgebildet ist. Figur 16 zeigt eine Variante, in der die wischarmzugewandte Fläche 64 konvex ausgebildet ist. Figur 17 zeigt eine Variante, in der die wischarmzugewandte Fläche 64 bereichsweise konkav ausgebildet ist. Die wischarmzugewandte Fläche 64 in der in Figur 17 abgebildeten Variante ist bereichsweise konvex ausgebildet.

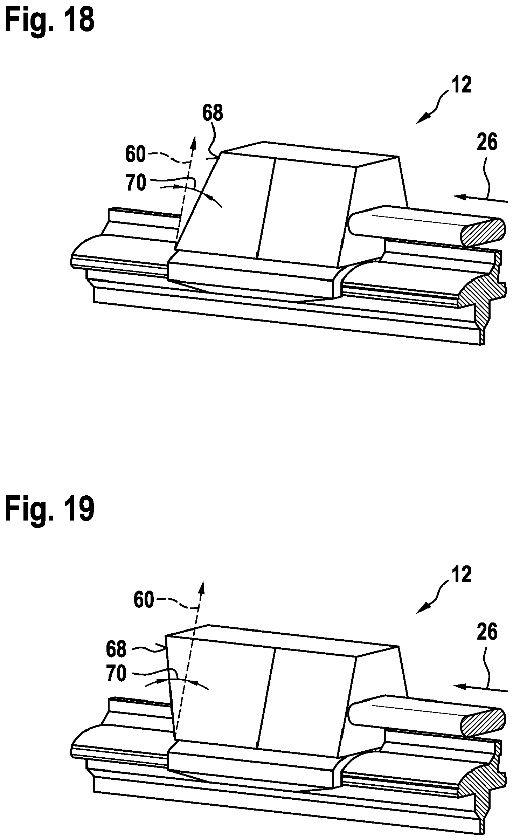

Figur 18 zeigt eine Variante, bei der eine wischarmabgewandte Fläche 68 gegenüber der Flächennormalen 60 um einen linksseitigen Winkel 70 von 15° gegen die Wischarmrichtung 26 verkippt ist. Figur 19 zeigt eine Variante, bei der eine wischarmabgewandte Fläche 68 gegenüber der Flächennormalen 60 um einen linksseitigen Winkel 70 von 10° in Wischarmrichtung 26 verkippt ist.

In den in den Figuren 15 bis 17 gezeigten Varianten der Adaptereinheit ist die wischarmabgewandte Fläche 68 jeweils konvex ausgebildet.

In der in Figur 12 abgebildeten Variante ist das Abdeckelement 20 über eine nicht gezeigte Rastverbindung mit dem Grundelement 22 fest verbindbar. Das Grundelement 22 weist eine Wischarmaufnahme 72 auf. Die Wischarmaufnahme 72 ist dazu eingerichtet, an den Wischarm zu koppeln, so dass der Wischarm um eine Lagerachse 74 schenkbar bzw. drehbar ist. Das Grundelement 22 ist dazu eingerichtet, das Wischblatt über eine nicht gezeigte Steckverbindung aufzunehmen.

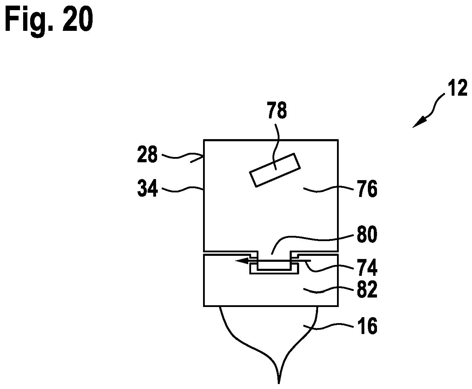

Figur 20 zeigt einen Schnitt durch eine alternative Ausführungsform der Adaptereinheit entlang der Trennlinie und senkrecht zur Wischarmrichtung 26. Die Adaptereinheit 12 weist eine Wischarmadaptereinheit 76 auf. Die Wischarmadaptereinheit weist die Windabweiserfläche 28 auf. Die Wischarmadaptereinheit weist eine Wischarmöffnung 78 auf, welche dazu eingerichtet ist, den Wischarm aufzunehmen. Die Wischarmöffnung ist eine Öffnung für einen Aufnahmekanal, in den der Wischarm einführbar ist. Der Aufnahmekanal verläuft weitgehend parallel zur Wischarmrichtung. Die Wischarmadaptereinheit weist im Ausführungsbeispiel ein nicht abgebildetes Fixiermittel auf, welches zu einer lösbaren Kopplung des Wischarms mit der Wischarmadaptereinheit vorgesehen ist. Die Wischarmadaptereinheit 76 weist eine Wischblattadaptereinheitaufnahme 80 auf, welche dazu vorgesehen ist, eine Wischblattadaptereinheit 82 um die Lagerachse 74 schwenkbar aufzunehmen. Die Wischblattadaptereinheit 82 ist dazu eingerichtet vorgesehen, das Wischblatt 16 aufzunehmen.

In vorteilhaften Ausführungsformen weist die Windabweiserfläche 28 eine veränderte bzw. besondere Oberflächenstruktur auf. Die Oberfläche kann wenigstens bereichsweise aufgeraut sein und/oder eine Haifischhautstruktur aufweisen und/oder eine Golfballstruktur aufweisen. Eine solche Oberflächenstruktur beeinflusst den über sie strömenden Luftstrom. Auf diese Weise lassen sich die aerodynamischen Eigenschaften der Windabweiserfläche verbessern. Insbesondere ist es möglich, über die Windabweiserfläche wirkende Anpresskräfte durch eine Auswahl der Art und Anordnung der veränderten Oberflächenstruktur präzise einzustellen.

## Patentansprüche

1. Adaptereinheit, die zu einer Kopplung, insbesondere lösbaren Kopplung eines Wischblatts mit einem Wischarm vorgesehen ist, aufweisend eine Windabweiserfläche, welche dazu eingerichtet ist, eine anströmende Luft abzuweisen und das Wischblatt an eine Fahrzeugscheibe zu drücken, **dadurch gekennzeichnet, dass** die Windabweiserfläche wenigstens eine erste Teilfläche und eine zweite Teilfläche aufweist, wobei die erste Teilfläche eine andere Ausrichtung aufweist als die zweite Teilfläche und/oder wobei die erste Teilfläche eine andere Geometrie aufweist als die zweite Teilfläche, wobei die Adaptereinheit dazu eingerichtet ist, den Wischarm mit dem Wischblatt um eine Lagerachse schwenkbar zu verbinden..

2. Adaptereinheit nach Anspruch 1, **dadurch gekennzeichnet, dass** die Windabweiserfläche einen Hauptwinkel (38) zwischen 25° und 75°, bevorzugt zwischen 40° und 60° mit einer Windanströmrichtung einschließt.

3. Adaptereinheit nach einem der vorhergehenden Ansprüche, **dadurch gekennzeichnet, dass** die erste Teilfläche und/oder die zweite Teilfläche zumindest bereichsweise parallel und/oder weitgehend parallel zu einer Wischarmrichtung ausgerichtet ist.

4. Adaptereinheit nach einem der vorhergehenden Ansprüche, **dadurch gekennzeichnet, dass** eine Trennlinie zwischen der ersten Teilfläche und der zweiten Teilfläche zumindest bereichsweise senkrecht und/oder weitgehend senkrecht zur Wischarmrichtung ausgerichtet ist.

5. Adaptereinheit nach einem der vorhergehenden Ansprüche, **dadurch gekennzeichnet, dass** die erste Teilfläche und/oder die zweite Teilfläche zumindest bereichsweise eben oder weitgehend eben ausgebildet ist.

6. Adaptereinheit nach einem der vorhergehenden Ansprüche, **dadurch gekennzeichnet, dass** die erste Teilfläche unter einem ersten Winkel (40) zwischen 0° und 45°, bevorzugt zwischen 5° und 30°, besonders bevorzugt zwischen 10° und 20° zu der zweiten Teilfläche angeordnet ist, wobei der erste Winkel der Winkel zwischen einer Flächennormalen der ersten Teilfläche und einer Flächennormalen der zweiten Teilfläche ist.

7. Adaptereinheit nach einem der vorhergehenden Ansprüche, **dadurch gekennzeichnet, dass** die erste Teilfläche und die zweite Teilfläche wenigstens teilweise in der Trennlinie zusammentreffen und einen zweiten Winkel (46) an der Trennlinie aufspannen, wobei der zweite Winkel an einer Außenseite der Windabweiserfläche bzw. an einer windzugewandten Seite der Windabweiserfläche liegt und der zweite Winkel zwischen 180° und 270°, bevorzugt zwischen 190° und 235°, besonders bevorzugt zwischen 200° und 220° liegt.

8. Adaptereinheit nach einem der vorhergehenden Ansprüche, **dadurch gekennzeichnet, dass** die erste Teilfläche und die zweite Teilfläche wenigstens teilweise in der Trennlinie zusammentreffen und einen dritten Winkel an der Trennlinie aufspannen, wobei der dritte Winkel an einer Außenseite der Windabweiserfläche bzw. an einer windzugewandten Seite der Windabweiserfläche liegt und der dritte Winkel zwischen 90° und 180°, bevorzugt zwischen 135° und 170°, besonders bevorzugt zwischen 150° und 160° liegt.

9. Adaptereinheit nach einem der vorhergehenden Ansprüche, **gekennzeichnet durch** eine obere Fläche, welche an einer windabgewandten Seite der Windabweiserfläche angeordnet ist und parallel oder weitgehend parallel zu der Wischarmrichtung ausgerichtet ist und wobei die obere Fläche einen oberen Winkel zwischen 10° und 25°, bevorzugt zwischen 15° und 20° mit der Windanströmrichtung einschließt, so dass die obere Fläche dazu eingerichtet ist, eine anströmende Luft abzuweisen und das Wischblatt an eine Fahrzeugscheibe zu drücken.

10. Adaptereinheit nach einem der vorhergehenden Ansprüche, **dadurch gekennzeichnet, dass** die obere Fläche zumindest bereichsweise konvex ausgebildet ist.

11. Adaptereinheit nach einem der vorhergehenden Ansprüche, **gekennzeichnet durch** eine Rückseite, welche an einer der Windabweiserfläche gegenüberliegenden Seite der Adaptereinheit angeordnet ist und welche an einer windabgewandten Seite der Adaptereinheit angeordnet ist, wobei die Rückseite um einen hinteren Winkel zwischen 10° und 40°, bevorzugt zwischen 20° und 30° gegenüber einer Flächennormalen einer Adaptereinheitgrundfläche verkippt ist, so dass die Rückseite die Adaptereinheitgrundfläche in der Windanströmrichtung überragt.

12. Adaptereinheit nach einem der vorhergehenden Ansprüche, **gekennzeichnet durch** eine wischarmzugewandete Fläche, welche dazu eingerichtet ist, den Wischarm zur Kopplung mit der Adaptereinheit durchzuführen und/oder aufzunehmen, wobei die wischarmzugewandte Fläche um einen rechtsseitigen Winkel zwischen 10° und 40°, bevorzugt zwischen 20° und 30° gegenüber einer Flächennormalen einer Adaptereinheitgrundfläche verkippt ist.

13. Adaptereinheit nach Anspruch 12, **dadurch gekennzeichnet, dass** die wischarmzugewandte Fläche wenigstens bereichsweise konkav ausgebildet ist.

14. Adaptereinheit nach einem der vorhergehenden Ansprüche, **gekennzeichnet durch** eine wischarmabgewandte Fläche, welche gegenüber einer Seite der Adaptereinheit angeordnet ist, welche dazu vorgesehen ist, dass an ihr der Wischarm mit der Adaptereinheit koppelt, wobei die wischarmabgewandte Fläche um einen linksseitigen Winkel zwischen 10° und 40°, bevorzugt zwischen 20° und 30° gegenüber einer Flächennormalen einer Adaptereinheitgrundfläche verkippt ist.

15. Adaptereinheit nach Anspruch 14, **dadurch gekennzeichnet, dass** die wischarmabgewandte Fläche wenigstens bereichsweise konvex ausgebildet ist.

16. Adaptereinheit nach einem der vorhergehenden Ansprüche, umfassend eine Wischarmadaptereinheit und eine Wischblattadaptereinheit, wobei die Wischarmadaptereinheit zur Kopplung mit dem Wischarm vorgesehen ist und die Wischblattadaptereinheit dazu vorgesehen ist, das Wischblatt aufzunehmen, wobei die Wischarmadaptereinheit eine Wischblattadaptereinheitaufnahme aufweist, welche dazu vorgesehen ist, die Wischblattadaptereinheit um die Lagerachse schwenkbar aufzunehmen.

17. Adaptereinheit nach einem der vorhergehenden Ansprüche, umfassend ein Grundelement, ein Abdeckelement und eine Wischarmaufnahme, welche dazu vorgesehen ist, den Wischarm um die Lagerachse schwenkbar aufzunehmen, wobei das Abdeckelement mit dem Grundelement verbindbar ausgebildet ist und die Wischarmaufnahme weitgehend abdeckt, und wobei das Abdeckelement die Windabweiserfläche aufweist, und wobei das Grundelement dazu eingerichtet ist das Wischblatt aufzunehmen, und wobei insbesondere das Abdeckelement mit dem Grundelement fest verbindbar ausgebildet ist, so dass das mit dem Grundelement verbundene Abdeckelement gegenüber dem Grundelement weitgehend unbeweglich ist.
